# EUROPÄISCHE PATENTSCHRIFT

(11) **EP 3 020 513 B1**
(45) Veröffentlichungstag und Bekanntmachung des Hinweises auf die Patenterteilung: **17.01.2024**
(21) Anmeldenummer: 15192765.4
(22) Anmeldetag: 03.11.2015
(51) Int. Cl.: B25J 9/00

(54) **VERFAHREN ZUR HANDHABUNG UND/ODER ZUM MANIPULIEREN VON ARTIKELN WIE GEBINDEN ODER STÜCKGÜTERN**
METHOD FOR HANDLING AND/OR FOR MANIPULATING ARTICLES SUCH AS CONTAINERS OR PIECE GOODS
PROCÉDÉ DE MANIEMENT ET/OU DE MANIPULATION DES ARTICLES COMME DES RÉCIPIENTS OU DES MARCHANDISES AU DÉTAIL

(30) Priorität: 17.11.2014 DE 102014223393
(43) Veröffentlichungstag der Anmeldung: 18.05.2016
(73) Patentinhaber: Krones Aktiengesellschaft, 93073 Neutraubling (DE)
(72) Erfinder: WESTERMEIER, Christian, 93073 Neutraubling (DE); UNTERSEHER, Josef, 93073 Neutraubling (DE); KOLLMUSS, Manuel, 93073 Neutraubling (DE); EHBERGER, Marco, 93073 Neutraubling (DE); HARTL, Michael, 93073 Neutraubling (DE); ZEINER, Peter, 93073 Neutraubling (DE)
(74) Vertreter: Benninger, Johannes

(56) Entgegenhaltungen:
- WO-A1-2014/053115
- DE-A1-102010 007 631
- DE-A1-102013 208 082

## Beschreibung

Die vorliegende Erfindung betrifft ein Verfahren zur Handhabung und/oder zum Manipulieren von Artikeln, Gruppierungen, Gebinden oder Stückgütern mit den Merkmalen des unabhängigen Anspruchs 1.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt bspw. die DE 102 04 513 A1. Dort sind mehrere sich gegenüberliegende Greifarme in einem Mittelstück geführt. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Das Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtungen, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Aus der DE 10 2010 006 155 A1, aus der DE 10 2013 208 082 A1 sowie aus der US 8 210 068 B1 sind derartige Handhabungseinrichtung mit Tripoden bekannt.

Durch die WO 2014/053115 A1 ist ein Industrieroboter beschrieben. Der Industrieroboter umfasst drei als Steuerarme ausgebildete Betätigungseinheiten. Die Betätigungseinheiten sind jeweils über eine Antriebswelle mit einem Betätigungseinheit-Antrieb verbunden. Die Stangen sind über Gelenke an einem oberen Armabschnitt der Betätigungseinheit und über Gelenke mit einem Trägerelement des Roboters verbunden. Weiterhin umfasst der Industrieroboter eine als Hohlkörper ausgebildete erste Drehachse, mittels welcher ein Drehmoment eines ersten Drehachsen-Antriebs auf einen ggf. vorhandenen Greifer an dem Trägerelement zu übertragen. Die erste Drehachse weist zwei ineinander verschiebbare, teleskopartig angeordnete Rohre auf. Der erste Drehachsen-Antrieb treibt über einen Zahnriemen die erste Drehachse an. Das obere Rohr ist über ein erstes Gelenk beweglich mit der Roboterbasis verbunden und weist zwei Gelenkteile in Form eines Kardangelenks auf. Durch ein zweites Gelenk ist das untere Rohr der ersten Drehachse beweglich mit dem Trägerelement verbunden. Über die hohlen Gelenke und die erste Drehachse wird ein Drehmoment des ersten Drehachsen-Antriebs auf den Ring übertragen.

Die bekannten Parallelkinematik-Roboter bzw. sog. Tripoden können einen für den jeweiligen Roboter verfügbaren Arbeitsraum abdecken, der sich aus der Länge der Oberarme, dem Abstand der Befestigung der Oberarme zum Mittelpunkt einer gestellfesten Basis, der Länge der Unterarme, dem Abstand der Befestigung der Unterarme zum Mittelpunkt des sog. Tool-Center-Points am Werkzeugträger und dem maximalen Schwenkbereich der Oberarme ergibt. Dieser Arbeitsraum ist bezogen auf den Tool-Center-Point in z-Richtung ein Zylinder, an dessen unteren Rand sich ein Kugelsegment anschließt. Ferner wird der Arbeitsraum am oberen Rand gegebenenfalls noch eingeschränkt durch maximale Schwenkwinkel kardanischer Teleskop-Antriebswellen.

Die bekannten Deltaroboter bzw. Tripode besitzen eine hohe Genauigkeit und können darüber hinaus zur Handhabung der jeweiligen Artikel schnell verfahren werden. Um die jeweiligen Artikel entgegennehmen und nach der Handhabung bzw. Positionierung wieder freigeben zu können, weisen bekannte Tripode bewegbare Manipulatoren auf. So können die Manipulatoren bspw. pneumatisch, hydraulisch oder elektrisch angesteuert werden, so dass hierzu mit dem entsprechenden Manipulator Leitungsverbindungen gekoppelt sind. Hinsichtlich einer Bewegungsfreiheit des Tripods können diese Leitungsverbindungen hinderlich sein. Zudem müssen die Leitungsverbindungen sicher verlegt werden, so dass das Risiko einer Beschädigung von Leitungsverbindungen bei Betrieb des Tripods ausgeschlossen werden kann. Auch aus diesem Grunde besitzen aus dem Stand der Technik bekannte Tripode aufgrund der umständlichen Koppelung zwischen einem Manipulator und einem zugeordneten Aktor einen komplexen Aufbau und eine teilweise eingeschränkte Bewegungsfreiheit.

Ein vorrangiges Ziel der vorliegenden Erfindung kann darin gesehen werden, ein verbessertes Verfahren zur Handhabung von Artikeln, Gebinden, Gruppierungen oder Stückgütern zur Verfügung zu stellen, das die Handhabung mit ausreichender Bewegungsfreiheit und hoher Stellgenauigkeit erlaubt. Zudem soll das Verfahren einfach umgesetzt werden können.

Dieses Ziel der Erfindung wird mit dem Gegenstand des unabhängigen Verfahrensanspruchs erreicht. Merkmale vorteilhafter Weiterbildungen der Erfindung finden sich in den abhängigen Ansprüchen. So schlägt die vorliegende Erfindung zur Erreichung des genannten Ziels ein Verfahren zur Handhabung und/oder zum Manipulieren von Artikeln, Gruppierungen, Gebinden oder Stückgütern vor, das mit einer Vorrichtung durchgeführt wird, die eine obere Aufhängung aufweist, an welcher wenigstens drei drehbar angetriebene Stellarme befestigt sind, wobei die wenigstens drei Stellarme jeweils aus wenigstens zwei relativ zueinander schwenkbaren Armabschnitten bestehen und unabhängig voneinander betätigt werden können. Die Vorrichtung umfasst weiterhin einen Manipulator, der ein oder mehrere Mittel zum Greifen der Artikel umfasst und mit den wenigstens drei Stellarmen mechanisch gekoppelt ist, so dass durch eine Bewegung eines oder mehrerer der wenigstens drei Stellarme eine Position des Manipulators vorgegeben werden kann. Außerdem sieht die Vorrichtung eine Linearführung vor, die mit dem Manipulator und der Aufhängung über jeweils ein kardanisch wirkendes Gelenk in Verbindung steht, wobei die Linearführung als drehbare erste Welle ausgebildet ist, die mit dem Manipulator drehfest in Verbindung steht und wobei der Manipulator durch eine Rotationsbewegung der ersten Welle gemeinsam mit dieser Welle gedreht wird. Zudem ist eine als zweite Welle ausgebildete Betätigungseinrichtung vorgesehen, welche die Linearführung durchsetzt und über welche die ein oder mehreren Mittel zum temporären Greifen und Freigeben von Artikeln angesteuert werden können, wobei die als zweite Welle ausgebildete Betätigungseinrichtung zur Ansteuerung der ein oder mehreren Mittel relativ zur Linearführung gedreht wird, und wobei die zweite Welle bei einer Drehung der ersten Welle, die mit dem rotierbaren Manipulator drehfest in Verbindung steht, in Abhängigkeit von einem Status der Mittel zum temporären Greifen und Freigeben der Artikel entweder eine gleichsinnige, wahlweise eine synchrone Drehung mit der ersten Welle oder eine Ausgleichs- oder Gegendrehbewegung zu dieser ausführt.

Auf diese Weise kann sichergestellt werden, dass je nach Bedarf eine Drehung der ersten Welle, durch die der Manipulator gedreht wird, zur Aufrechterhaltung der Betätigung oder Freigabe der Mittel zum temporären Greifen und Freigeben der Artikel eine Ausgleichs- oder Gegendrehbewegung der zweiten Welle bedingt. Ebenso ist es dadurch ermöglicht, dass eine Drehung der ersten Welle, durch die der Manipulator gedreht wird, zur Änderung eines Betätigungs- oder Freigabestatus der Mittel zum temporären Greifen und Freigeben der Artikel eine gleichsinnige oder synchrone Drehbewegung der zweiten Welle bedingt.

Der Manipulator kann durch eine Rotationsbewegung der ersten Welle vorzugsweise um bis zu 360° oder auch um mehr als 360° gedreht werden. Die als zweite Welle ausgebildete Betätigungseinrichtung kann insbesondere eine zur Linearführung ungefähr konzentrische Orientierung besitzen, wobei diese bei einer Positionierung des Manipulators über einen oder mehrere der wenigstens drei Stellarme durchgehend beibehalten wird.

Außerdem kann eine Variante des erfindungsgemäßen Verfahrens vorsehen, dass die als zweite Welle ausgebildete Betätigungseinrichtung mit den ein oder mehreren Mitteln über ein Getriebe mit wenigstens einer Übersetzungsstufe in Verbindung steht, wobei das Getriebe ein Drehmoment der als zweiten Welle ausgebildeten Betätigungseinrichtung auf eine Stellbewegung der ein oder mehreren Mittel überträgt. Die die ein oder mehreren Mittel können bspw. wenigstens zwei gegenüberliegende Klemmbacken umfassen, die bei relativer Drehbewegung zwischen der als zweiten Welle ausgebildeten Betätigungseinrichtung und Linearführung relativ zueinander verfahren werden, wodurch Artikel, Stückgüter oder Gebinde gegriffen und verschoben, gedreht oder gehoben und versetzt werden können.

Wahlweise kann die wenigstens eine als zweite Welle ausgebildete Betätigungseinrichtung über einen separaten Aktor angesteuert werden, der drehfest auf der oberen Aufhängung aufsitzt.

Mit der Erfindung wird eine Möglichkeit geschaffen, bei Tripoden oder ähnlichen Robotern zusätzliche Antriebsmöglichkeiten in den sog. Tool-Center-Point bzw. in den Werkzeugträger einzubringen, ohne dass dies zu Nachteilen in der Betätigungslogik führen muss. Bei einer Ausführungsvariante, bei der zwischen dem Zentrum der Aufhängung und dem Tool-Center-Point zwei ineinander laufende Wellen angebracht sind, können zwei oder mehr Betätigungsmöglichkeiten bzw. Stellmöglichkeiten, bspw. in Form von Drehbewegungen, in den Tool-Center-Point übertragen werden. So kann zum Beispiel eine Drehbewegung einer Welle zum Schließen von Klemmbacken verwendet werden, während eine davon unabhängige Drehbewegung einer koaxialen Welle zum Drehen eines kompletten Greifers verwendet werden kann. Soll dabei jeweils nur eine Drehbewegung durchgeführt werden, so z.B. eine Drehung des Greifers, so öffnen oder schließen sich die Klemmbacken durch einen Stillstand der jeweils anderen Welle zur erstgenannten, da dadurch eine Relativbewegung zwischen den beiden Wellen erfolgt.

Gemäß vorliegendem Verfahren muss die zweite Welle, welche zum Schließen und Öffnen des Greifers dient, bei einer Drehung des Greifers durch Betätigung der ersten Welle eine Ausgleichsbewegung durchführen. Diese Ausgleichsbewegung erfolgt als Relativbewegung gegenüber der ersten Welle im Gleichlauf, im Gegenlauf oder synchron. Die Richtung der Ausgleichsbewegung hat je nach gewünschter Funktion zu erfolgen. Werden z.B. die Greifer durch eine Drehbewegung entgegen dem Uhrzeigersinn geschlossen und der Greifer entgegen dem Uhrzeigersinn gedreht, so muss die zweite Welle bei der Drehung des Greifers ebenfalls eine Drehung entgegen dem Uhrzeigersinn durchführen, um zu verhindern, dass sich die Klemmbacken öffnen. Analog dazu ist eine Drehung im Uhrzeigersinn umzusetzen. Die erforderlichen Drehrichtungen der Wellen sind abhängig von der technischen Ausführung der Umsetzung der Drehbewegung der zweiten Welle in eine Linearbewegung der Klemmbacken. Insgesamt kann durch das Durchführen einer Ausgleichsbewegung die gewünschte Funktion des Werkzeuges, z.B. des Greifers, erreicht und gewährleistet werden.

Bei bevorzugten Ausführungsformen können die Artikel während ihrer Handhabung auf einer Horizontalfördereinrichtung transportiert werden und hierbei vom Manipulator gegriffen werden. Nach dem Greifen kann der Manipulator ein Drehen und/oder einen seitlichen Versatz schräg zur Transportrichtung der Horizontalfördereinrichtung und/oder eine Verzögerung und/oder Beschleunigung der jeweiligen gegriffenen Artikel gegenüber einer Transportgeschwindigkeit der Horizontalfördereinrichtung bewirken.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer Handhabungs- und/oder Manipulationsvorrichtung zur Durchführung des erfindungsgemäßen Verfahrens.
Fig. 2 zeigt eine schematische Detailansicht eines unteren Teils der Vorrichtung aus Fig. 1.
Fig. 3 zeigt eine schematische Querschnittsdarstellung durch die Vorrichtung aus dem Ausführungsbeispiel gemäß Fig. 1 und Fig. 2.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar.

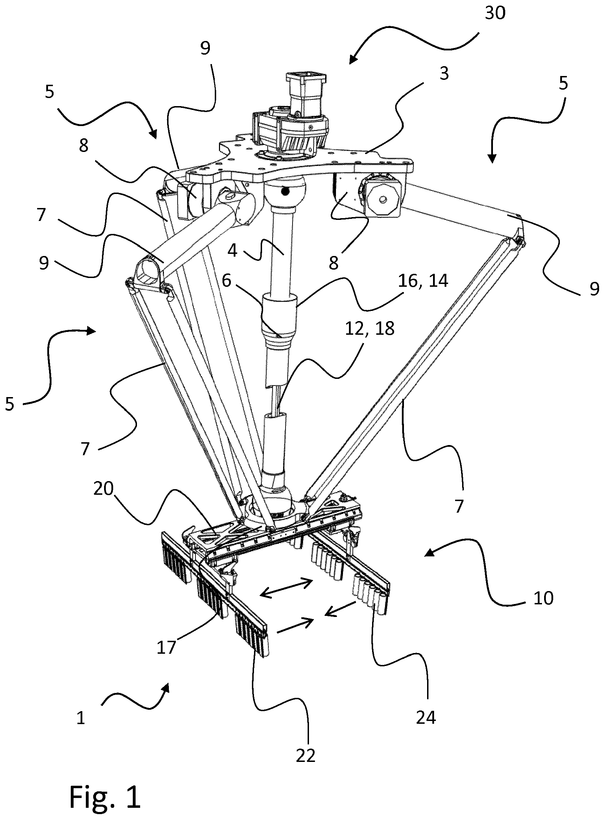

Einleitend sei an dieser Stelle darauf hingewiesen, dass die in den Figuren 1 bis 3 erläuterten Ausführungsvarianten der Vorrichtung zur Durchführung des erfindungsgemäßen Verfahrens sich auf einen Deltaroboter mit drei gleichartigen Schwenkarmen bzw. auf einen Tripod beziehen, der Teil einer Handhabungseinrichtung bzw. eines Manipulators zur Handhabung, zum Drehen, Verschieben oder Aufnehmen von Artikeln, Stückgütern oder Gebinden ist. Hinsichtlich einer möglichen Ausgestaltung des Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte die Vorrichtung 1 gemäß Fig. 1 bis Fig. 3 auch vier gleichartige Stellarme aufweisen.

Die Fig. 1 zeigt eine schematische Perspektivansicht einer Ausführungsform einer Vorrichtung 1 zur Durchführung des erfindungsgemäßen Verfahrens. Die Vorrichtung 1 ist bspw. ausgebildet zum Greifen, Drehen und Versetzen zu Gebinden zusammengefasster Getränkebehältnisse, die in Fig. 1 nicht mit dargestellt sind. Die Vorrichtung 1 kann jedoch ebenso auch zum Greifen, Drehen und Versetzen von beliebigen Artikeln oder Stückgütern eingesetzt werden.

Wie in Fig. 1 zu erkennen, besitzt die Vorrichtung 1 eine obere Aufhängung 3. An der oberen Aufhängung 3 sind drei Stellarme 5 über einen jeweils zugeordneten Antrieb 8 drehbar befestigt. Die drehende Bewegung der Stellarme 5 erfolgt hierbei derart, dass ihre Drehachsen parallel zueinander verlaufen. Weiter bestehen die drei Stellarme 5 aus wenigstens zwei relativ zueinander schwenkbaren Armabschnitten 7 und 9, wobei die unteren Armabschnitte 7 bzw. Unterarme 7 jeweils aus zwei parallel zueinander orientierten Gestängen gebildet sind. Der jeweilige obere Armabschnitt 9 bzw. Oberarm 9 steht mit seinem jeweils zugeordneten Antrieb 8 in Verbindung bzw. ist an seinem jeweils zugeordneten Antrieb 8 angeflanscht. Zudem können die drei Stellarme 5 unabhängig voneinander bewegt werden. Sämtliche Antriebe 8 stehen hierzu mit einer Steuerungseinheit in Verbindung, welche die Bewegung der Stellarme 5 vorgibt und die Antriebe 8 ansteuert.

Am unteren Ende der drei Stellarme 5 steht ein Manipulator 10 mit den drei Stellarmen 5 derart in Verbindung, dass der Manipulator 10 über eine Bewegung der drei Stellarme 5 zur Handhabung von Artikeln verfahren werden kann. Die in Fig. 1 nicht dargestellte Steuerungseinheit gibt daher die Bewegung der Stellarme 5 in Abhängigkeit einer für den Manipulator 10 vorgesehenen Position zum Greifen und Handhaben von Artikeln vor. Sämtliche der drei Stellarme 5 sind über einen Tragring 17 mit einer Basis 20 des Manipulators 10 mechanisch gekoppelt. Die mechanische Verbindung bzw. Koppelung zwischen dem Tragring 17 und der Basis 20 des Manipulators 10 ist derart, dass diese eine relative Verdrehung des Manipulators 10 gegenüber dem Tragring 17 erlaubt. Der Tragring 17 kann auch als Tool-Center-Point der Vorrichtung 1 bezeichnet werden.

In etwa mittig ist der Manipulator 10 an eine Linearführung 16 drehfest angeflanscht, wobei die Linearführung 16 als erste Welle 14 ausgebildet ist und somit der Manipulator 10 über die erste Welle 14 gedreht werden kann.

Weiter ist eine als zweite Welle 18 ausgebildete Betätigungseinrichtung 12 vorgesehen, mittels welcher Klemmbacken 22 und 24 zum Schließen und Öffnen angesteuert werden können. Die Drehachsen der ersten Welle 14 sowie der als zweite Welle 18 ausgebildeten Betätigungseinrichtung 12 sind identisch. Die erste Welle 14 und die zweite Welle 18 sind koaxial zueinander orientiert bzw. angeordnet. Da über die als zweite Welle 18 ausgebildete Betätigungseinrichtung 12 der Manipulator 10 bzw. die sich gegenüberliegenden Klemmbacken 22 und 24 des Manipulators 10 angesteuert werden können, sind keine pneumatischen, hydraulischen oder elektrischen Leitungsverbindungen notwendig, die zur Ansteuerung des Manipulators 10 bzw. der Klemmbacken 22 und 24 mit dem Manipulator 10 in Verbindung stehen.

Vorteilhafterweise besteht hierbei die Möglichkeit, den Manipulator 10 zusammen mit seinen Klemmbacken 22 und 24 über die erste Welle 14 um mehr als 360° zu drehen, da keine Leitungsverbindungen eine vollständige Umdrehung behindern. Hierdurch kann gegenüber aus dem Stand der Technik bekannten Vorrichtungen der Durchsatz bei Handhabung von Artikeln deutlich verbessert werden, da der Manipulator 10 nicht zurückgedreht werden muss, um diesen in eine Ausgangsorientierung zu überführen.

Wie soeben erwähnt, können bei der in Fig. 1 gezeigten Ausführungsform die beiden Klemmbacken 22 und 24 durch eine Rotation der als zweite Welle 18 ausgebildeten Betätigungseinrichtung 12 relativ zueinander verstellt werden bzw. aufeinander zu bewegt und voneinander weg bewegt werden. Die jeweilige Bewegung der Klemmbacken 22 und 24 bei Ansteuerung über die als zweite Welle 18 ausgebildete Betätigungseinrichtung 12 ist vorliegend mittels Pfeildarstellung verdeutlicht. Beide Klemmbacken 22 und 24 sind an der Basis 20 des Manipulators 10 hängend und linear beweglich befestigt. Eine Ansteuerung der Klemmbacken 22 und 24 erfolgt über mit der zweiten Welle 18 in Verbindung stehende Übersetzungsstufen eines Getriebes, die in Fig. 1 nicht zu erkennen sind und ein Drehmoment der zweiten Welle 18 auf eine Stellbewegung der Klemmbacken 22 und 24 übertragen.

Die Linearführung 16 bzw. die erste Welle 14 umfasst zwei Gehäuseteile 4 und 6, die miteinander teleskopierbar in Verbindung stehen und jeweils einen Hohlraum zur Aufnahme der als zweite Welle 18 ausgebildeten Betätigungseinrichtung 12 bereitstellen. Über ein kardanisch wirkendes Gelenk ist die als zweite Welle 18 ausgebildete Betätigungseinrichtung 12 an den Manipulator 10 und an einen Aktor 30 gekoppelt.

Der Aktor 30 sitzt drehfest auf der oberen Aufhängung 3 auf. Über den Aktor 30 kann das als zweite Welle 18 ausgebildete Betätigungsglied 12 drehend bewegt werden, womit die Klemmbacken 22 und 24 des Manipulators 10 zum Greifen oder Freigeben von Artikeln verfahren werden.

Gemäß dem erfindungsgemäßen Verfahren muss die zweite Welle 18, welche zum Schließen und Öffnen der Klemmbacken 22 und 24 des Manipulators 10 bzw. des Greifers dient, bei einer Drehung des Greifers oder Manipulators 10 durch Betätigung der ersten Welle 14 eine Ausgleichsbewegung durchführen. Diese Ausgleichsbewegung erfolgt als Relativbewegung gegenüber der ersten Welle 14 im Gleichlauf, im Gegenlauf oder synchron. Die Richtung der Ausgleichsbewegung hat je nach gewünschter Funktion zu erfolgen. Werden z.B. die Klemmbacken 22 und 24 durch eine Drehbewegung der zweiten Welle 18 entgegen dem Uhrzeigersinn geschlossen und der Manipulator 10 bzw. der Greifer gleichzeitig durch Drehung der ersten Welle 14 entgegen dem Uhrzeigersinn gedreht, so muss die zweite Welle 18 bei der Drehung des Manipulators 10 ebenfalls eine Drehung entgegen dem Uhrzeigersinn durchführen, um zu verhindern, dass sich die Klemmbacken 22 und 24 öffnen. Analog dazu ist eine Drehung im Uhrzeigersinn umzusetzen. Die erforderlichen Drehrichtungen der Wellen 14 und 18 sind abhängig von der technischen Ausführung der Umsetzung der Drehbewegung der zweiten Welle 18 in eine Linearbewegung der Klemmbacken 22 und 24.

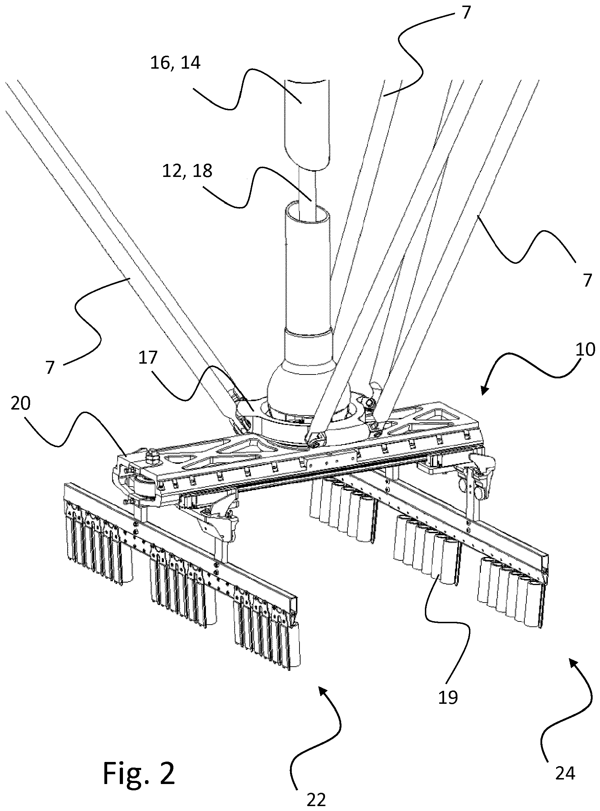

Die schematische Detailansicht der Fig. 2 verdeutlicht einen unteren Teil der Vorrichtung 1 aus Fig. 1 und zeigt hierbei insbesondere nochmals im Detail eine Ausführungsform des Manipulators 10, wie er für das erfindungsgemäße Verfahren vorgesehen sein und eingesetzt werden kann.

Die Klemmbacken 22 und 24 besitzen zum Greifen von Artikeln auf ihrer der jeweiligen gegenüberliegenden Klemmbacke 22 bzw. 24 zugewandten Seite mehrere biegeweiche Kontaktelemente 19. Die biegeweichen Kontaktelemente 19 werden bei einer Zustellbewegung der Klemmbacken 22 und 24 mit den jeweiligen Artikeln kraftbeaufschlagt in Anlage gebracht und setzen die jeweiligen Artikel im Wesentlichen unbeweglich am Manipulator 10 fest.

Auch zeigt die Fig. 2 nochmals im Detail die unteren Armabschnitte 7 der Stellarme 5 (vgl. Fig. 1), welche jeweils als Gestängekonstruktion ausgebildet sind und an ihrem unteren Ende mit dem Tragring 17 (bzw. dem sog. Tool-Center-Point) jeweils gelenkig in Verbindung stehen. Wie vorhergehend bereits erwähnt, kann der Manipulator 10 über die erste bzw. die äußere Welle 14 relativ zum Tragring 17 gedreht werden.

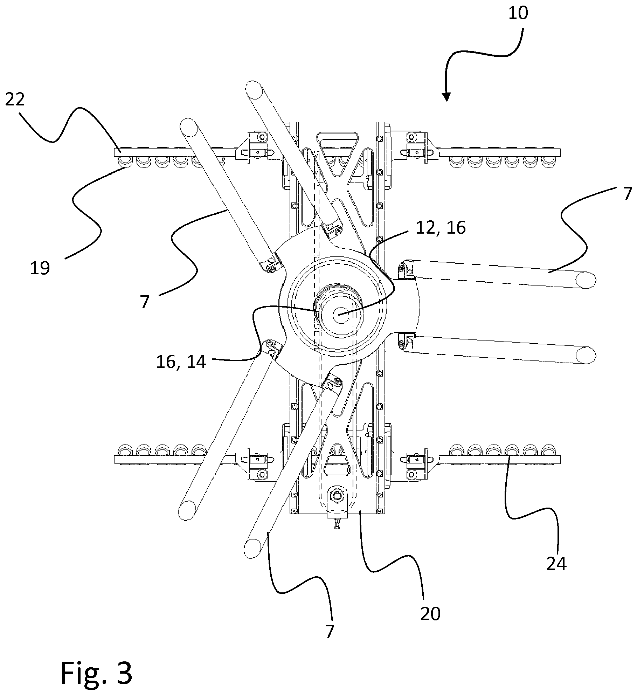

Die schematische Querschnittsdarstellung der Fig. 3 lässt weitere Details der Vorrichtung 1 aus dem Ausführungsbeispiel gemäß Figuren 1 und 2 erkennen. In Fig. 3 sind nochmals das als zweite Welle 18 ausgebildete Betätigungsglied 12 sowie die als erste Welle 14 ausgebildete Linearführung 16 zu erkennen. Die zweite Welle 18 und die erste Welle 14 besitzen eine konzentrische Orientierung und eine identische Drehachse, d.h. sie sind koaxial zueinander angeordnet. Eine Drehung des Manipulators 10 kann durch die als erste Welle 14 ausgebildete Linearführung 16 bewirkt werden, wobei die Drehachse in Fig. 3 vertikal bzw. in Richtung der Bildebene orientiert ist.

Wie bereits erwähnt, sind bei Drehbewegungen des Manipulators 10, die durch Drehungen der äußeren ersten Welle 14 induziert werden, gleichsinnige oder gegensinnige Ausgleichsbewegungen der inneren zweiten Welle 18 erforderlich, um nicht eine unerwünschte Betätigung der Klemmbacken 22 und 24, d.h. deren Öffnen oder weitergehendes Schließen auszulösen. Der Umfang dieser Ausgleichsbewegung richtet sich einerseits nach der kinematischen Verknüpfung der Stellantriebe, die durch die zweite Welle 18 betätigt werden, so z.B. nach der Übersetzung dieser Stellantriebe. So können je nach Übersetzung unterschiedliche Drehwinkel der Ausgleichsbewegung erforderlich sein. Zudem richtet sich die Ausgleichsbewegung nach der Drehrichtung der ersten Welle 14, welche je nach Bedarf eine gegensinnige oder gleichsinnige Ausgleichsbewegung der zweiten Welle 18 erfordert, sollen bei der Drehung des Manipulators 10 die Klemmbacken 22 und 24 unverändert geschlossen oder geöffnet bleiben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Vorrichtung
3 Aufhängung, obere Aufhängung
4 erstes Gehäuseteil
5 Stellarm
6 Zweites Gehäuseteil
7 unterer Armabschnitt, Unterarm
8 Antrieb
9 oberer Armabschnitt, Oberarm
10 Manipulator
12 Betätigungsglied, Betätigungseinrichtung
14 erste Welle
16 Linearführung
17 Tragring
18 weitere Welle, zweite Welle
19 Kontaktelement
20 Basis
22 Klemmbacke
24 Klemmbacke
30 Aktor

## Patentansprüche

1. Verfahren zur Handhabung von Artikeln wie Gebinde, Stückgüter oder dergleichen mit einer Vorrichtung, welche umfasst:
- eine obere Aufhängung (3), an welcher wenigstens drei drehbar angetriebene Stellarme (5) befestigt sind, wobei die wenigstens drei Stellarme (5) jeweils aus wenigstens zwei relativ zueinander schwenkbaren Armabschnitten (7, 9) bestehen und unabhängig voneinander betätigt werden können,
- einen Manipulator (10), welcher ein oder mehrere Mittel zum Greifen der Artikel umfasst und mit den wenigstens drei Stellarmen (5) mechanisch gekoppelt ist, so dass durch eine Bewegung eines oder mehrerer der wenigstens drei Stellarme (5) eine Position des Manipulators (10) vorgegeben werden kann und umfassend
- eine Linearführung (16), die mit dem Manipulator (10) und der Aufhängung (3) über jeweils ein kardanisch wirkendes Gelenk in Verbindung steht, wobei die Linearführung (16) als drehbare bzw. erste Welle (14) ausgebildet ist, die mit dem Manipulator (10) drehfest in Verbindung steht und wobei der Manipulator (10) durch eine Rotationsbewegung der ersten Welle (14) gemeinsam mit der Welle (14) gedreht wird, und
- mindestens eine als zweite Welle (18) ausgebildete Betätigungseinrichtung (12), welche die Linearführung (16) durchsetzt und über welche die ein oder mehreren Mittel zum temporären Greifen und Freigeben von Artikeln angesteuert werden können, wobei
- die als zweite Welle (18) ausgebildete Betätigungseinrichtung (12) zur Ansteuerung der ein oder mehreren Mittel relativ zur Linearführung (16) gedreht wird,
wobei die zweite Welle (18) bei einer Drehung der ersten Welle (14), die mit dem rotierbaren Manipulator (10) drehfest in Verbindung steht, in Abhängigkeit von einem Status der Mittel zum temporären Greifen und Freigeben der Artikel entweder eine gleichsinnige oder synchrone Drehung mit der ersten Welle (14) oder eine Ausgleichs- oder Gegendrehbewegung zu dieser ausführt,
**dadurch gekennzeichnet, dass** eine Drehung der ersten Welle (14), durch die der Manipulator (10) gedreht wird, zur Aufrechterhaltung der Betätigung oder Freigabe der Mittel zum temporären Greifen und Freigeben der Artikel eine Ausgleichs- oder Gegendrehbewegung der zweiten Welle (18) bedingt.

2. Verfahren nach Anspruch 1, bei dem eine Drehung der ersten Welle (14), durch die der Manipulator (10) gedreht wird, zur Änderung eines Betätigungs- oder Freigabestatus der Mittel zum temporären Greifen und Freigeben der Artikel eine gleichsinnige oder synchrone Drehbewegung der zweiten Welle (18) bedingt.

3. Verfahren nach einem der Ansprüche 1 bis 2, bei dem der Manipulator (10) durch eine Rotationsbewegung der ersten Welle (14) um 360° und/oder mehr als 360° gedreht wird.

4. Verfahren nach einem der Ansprüche 1 bis 3, bei dem die als zweite Welle (18) ausgebildete Betätigungseinrichtung (12) eine zur Linearführung (16) konzentrische Orientierung besitzt und diese bei einer Positionierung des Manipulators (10) über einen oder mehrere der wenigstens drei Stellarme (5) durchgehend beibehält.

5. Verfahren nach einem der Ansprüche 1 bis 4, bei dem die als zweite Welle (18) ausgebildete Betätigungseinrichtung (12) mit den ein oder mehreren Mitteln über ein Getriebe mit wenigstens einer Übersetzungsstufe in Verbindung steht, wobei das Getriebe ein Drehmoment der als zweiten Welle (18) ausgebildeten Betätigungseinrichtung (12) auf eine Stellbewegung der ein oder mehreren Mittel überträgt.

6. Verfahren nach einem der Ansprüche 1 bis 5, bei dem die ein oder mehreren Mittel wenigstens zwei gegenüberliegende Klemmbacken (22, 24) umfassen, die bei relativer Drehbewegung zwischen der als zweiten Welle (18) ausgebildeten Betätigungseinrichtung (12) und Linearführung (16) relativ zueinander verfahren werden.

7. Verfahren nach einem der Ansprüche 1 bis 6, bei dem die wenigstens eine als zweite Welle (18) ausgebildete Betätigungseinrichtung über einen Aktor (30) angesteuert wird, der drehfest auf der oberen Aufhängung (3) aufsitzt.

## Claims

1. A method for handling articles, such as packs, piece goods, or the like, by means of an apparatus, comprising:
- an upper suspension (3), to which at least three rotatably driven positioning arms (5) are fastened, wherein the at least three positioning arms (5) are each made up of at least two arm sections (7, 9), which are swivelable relative to one another and can be operated independently of one another,
- a manipulator (10), which comprises one or more means for gripping the articles, and which is mechanically coupled to the at least three positioning arms (5) such that a position of the manipulator (10) can be specified by a movement of one or more of the at least three positioning arms (5), and comprising
- a linear guide (16) in contact with the manipulator (10) and the suspension (3), each by way of a cardanic-type joint, wherein the linear guide (16) is designed as rotatable or first shaft (14), which is non-rotatingly connected to the manipulator (10), and wherein the manipulator (10) is rotated together with the shaft (14) by a rotational movement of the first shaft (14), and
- at least one actuating device (18) designed as second shaft (12), which passes through the linear guide (16), and by way of which the one or more means can be controlled for the temporary gripping and releasing of articles, wherein
- the actuating device (18) designed as second shaft (12) is rotated relative to the linear guide (16) in order to control the one or more means,
wherein, upon a rotation of the first shaft (14) non-rotatingly connected to the rotatable manipulator (10), the second shaft (18) performs either a rotation in the same direction or synchronous with the first shaft (14) or a compensatory rotation or counter rotation thereto, based on a status of the means for the temporary gripping and releasing of articles,
**characterised in that** a rotation of the first shaft (14), which rotates the manipulator (10), causes a compensatory rotation or counter rotation of the second shaft (18) in order to maintain the actuation of or in order to release the means for the temporary gripping and releasing of the articles.

2. The method according to claim 1, in which a rotation of the first shaft (14), which rotates the manipulator (10), causes a rotary movement of the second shaft (18) in the same direction or synchronous with the first shaft (14) in order to change an actuation status or release status of the means for the temporary gripping and releasing of the articles.

3. The method according to one of the claims 1 to 2, in which the manipulator (10) is rotated by 360° and/or more than 360° by a rotational movement of the first shaft (14).

4. The method according to one of the claims 1 to 3, in which the actuating device (12) designed as second shaft (18) has a concentric orientation in relation to the linear guide (16) and continuously maintains this orientation throughout a positioning of the manipulator (10) by way of one or more of the at least three positioning arms (5).

5. The method according to one of the claims 1 to 4, in which the actuating device (12) designed as second shaft (18) is in contact with the one or more means by way of a gearing mechanism with at least one transmission step, wherein the gearing mechanism transmits a torque from the actuating device (12) designed as second shaft (18) to a positioning movement of the one or more means.

6. The method according to one of the claims 1 to 5, in which the one or more means comprise at least two clamping jaws (22, 24) located opposite each other, which are moved relative to each other upon relative rotary movement between the actuating device (12) designed as second shaft (18) and the linear guide (16).

7. The method according to one of the claims 1 to 6, in which the at least one actuating device designed as second shaft (18) is controlled by way of an actuator (30), which is positioned non-rotatingly on the upper suspension (3).

## Revendications

1. Procédé de manipulation d'articles, tels que multipacks, produits de détail ou similaires, au moyen d'un dispositif qui comprend:
- une suspension supérieure (3) sur laquelle sont fixés au moins trois bras de réglage (5) entraînés en rotation, dans lequel lesdits au moins trois bras de réglage (5) se composent chacun d'au moins deux sections de bras (7, 9) aptes à pivoter l'une par rapport à l'autre et peuvent être actionnés indépendamment les uns des autres,
- un manipulateur (10) qui comprend un ou plusieurs moyen(s) de préhension des articles et est couplé mécaniquement auxdits au moins trois bras de réglage (5) de sorte qu'une position du manipulateur (10) peut être prédéterminée par un mouvement d'un ou de plusieurs desdits au moins trois bras de réglage (5), et comprenant
- un guidage linéaire (16) qui est relié au manipulateur (10) et à la suspension (3) par l'intermédiaire de respectivement une articulation à action cardan, dans lequel le guidage linéaire (16) est conçu en tant qu'arbre rotatif ou bien premier arbre (14) qui est relié de manière solidaire en rotation au manipulateur (10), et dans lequel le manipulateur (10) est tourné conjointement avec l'arbre (14) par un mouvement de rotation du premier arbre (14), et
- au moins un dispositif d'actionnement (12) conçu en tant que deuxième arbre (18) qui traverse le guidage linéaire (16) et par l'intermédiaire duquel ledit un ou lesdits plusieurs moyens de préhension et de libération temporaires d'objets peuvent être commandés, dans lequel
- le dispositif d'actionnement (12) conçu en tant que deuxième arbre (18) est tourné par rapport au guidage linéaire (16) pour commander ledit un ou lesdits plusieurs moyens,
dans lequel, lors d'une rotation du premier arbre (14) qui est relié de manière solidaire en rotation au manipulateur rotatif (10), le deuxième arbre (18) exécute soit une rotation dans le même sens ou synchrone avec le premier arbre (14) soit un mouvement de compensation ou de contre-rotation par rapport à celui-ci, en fonction d'un état des moyens de préhension et de libération temporaires des articles,
**caractérisé par le fait qu'**une rotation du premier arbre (14) par laquelle le manipulateur (10) est tourné a pour conséquence un mouvement de compensation ou de contre-rotation du deuxième arbre (18) afin de maintenir l'actionnement ou la libération des moyens de préhension et de libération temporaires des articles.

2. Procédé selon la revendication 1, dans lequel une rotation du premier arbre (14) par laquelle le manipulateur (10) est tourné a pour conséquence un mouvement de rotation dans le même sens ou sychrone du deuxième arbre (18) afin de changer un état d'actionnement ou de libération des moyens de préhension et de libération temporaires des articles.

3. Procédé selon l'une quelconque des revendications 1 à 2, dans lequel le manipulateur (10) est tourné de 360° et/ou de plus de 360° par un mouvement de rotation du premier arbre (14).

4. Procédé selon l'une quelconque des revendications 1 à 3, dans lequel le dispositif d'actionnement (12) conçu en tant que deuxième arbre (18) présente une orientation concentrique au guidage linéaire (16) et maintient celle-ci en continu lors d'un positionnement du manipulateur (10) par un ou plusieurs desdits au moins trois bras de réglage (5).

5. Procédé selon l'une quelconque des revendications 1 à 4, dans lequel le dispositif d'actionnement (12) conçu en tant que deuxième arbre (18) est relié audit un ou auxdits plusieurs moyens par l'intermédiaire d'un engrenage ayant au moins un étage de transmission, dans lequel l'engrenage transmet un couple du dispositif d'actionnement (12) conçu en tant que deuxième arbre (18) à un mouvement de réglage dudit un ou desdits plusieurs moyens.

6. Procédé selon l'une quelconue des revendications 1 à 5, dans lequel ledit un ou lesdits plusieurs moyens comprennent au moins deux mâchoires de serrage (22, 24) opposées qui sont déplacées l'une par rapport à l'autre lors d'un mouvement de rotation relatif entre le dispositif d'actionnement (12) conçu en tant que deuxième arbre (18) et le guidage linéaire (16) .

7. Procédé selon l'une quelconque des revendications 1 à 6, dans lequel ledit au moins un dispositif d'actionnement conçu en tant que deuxième arbre (18) est commandé par l'intermédiaire d'un actionneur (30) qui repose de manière solidaire en rotration sur la suspension supérieure (3).
